# EUROPÄISCHE PATENTSCHRIFT

(11) **EP 2 707 214 B1**
(45) Veröffentlichungstag und Bekanntmachung des Hinweises auf die Patenterteilung: **13.03.2019**
(21) Anmeldenummer: 12719259.9
(22) Anmeldetag: 19.04.2012
(51) Int. Cl.: B30B 11/08, B30B 15/02, B23Q 16/00

(54) **ROTOR FÜR EINE RUNDLÄUFERPRESSE UMFASSEND EIN CODIERELEMENT FÜR DIE BESTÜCKUNG MINDESTENS EINES KURVENTRÄGERS DES ROTORS UND VERFAHREN ZUM BESTÜCKEN DER KURVENTRÄGER AUF DEM ROTOR**
ROTOR FOR A ROTARY PRESS COMPRISING A CODING ELEMENT FOR MOUNTING AT LEAST ONE CAM CARRIER AND METHOD FOR MOUNTING SAID CAM CARRIER ON THE ROTOR
ROTOR POUR UNE PRESSE ROTATIVE COMPRENANT UN ÉLÉMENT DE CODAGE POUR L'ÉQUIPEMENT D'AU MOINS UN PORTE-CAME ET PROCÉDÉ POUR EQUIPER LE ROTOR AVEC LEDIT PORTE-CAME

(30) Priorität: 10.05.2011 DE 102011101292
(43) Veröffentlichungstag der Anmeldung: 19.03.2014
(73) Patentinhaber: Fette Compacting GmbH, 21493 Schwarzenbek (DE)
(72) Erfinder: LÜDEMANN, Stefan, 21035 Hamburg (DE); LÜNEBURG, Peter, 23919 Berkenthin (DE); MALICK, Daniel, 22926 Ahrensburg (DE)
(74) Vertreter: Hauck Patentanwaltspartnerschaft mbB
(86) Internationale Anmeldenummer: PCT/EP2012/001685
(87) Internationale Veröffentlichungsnummer: WO 2012/152369

(56) Entgegenhaltungen:
- DE-U1-202005 017 516
- JP-A- 2001 219 329
- US-A1- 2002 192 330
- US-A1- 2009 139 417
- US-A1- 2009 283 467
- US-B2- 7 014 443

## Beschreibung

Die Erfindung betrifft einen Rotor für eine Rundläuferpresse, umfassend eine obere und eine untere Stempelführung für obere und untere Pressstempel sowie eine zwischen den Stempelführungen angeordnete Matrizenscheibe, weiter umfassend einen oberen Kurventräger und einen unteren Kurventräger, an denen jeweils mindestens ein Steuerkurvenelement befestigt ist, gemäß dem Oberbegriff des Anspruchs 1. Die Erfindung betrifft außerdem ein Verfahren zum Bestücken eines Kurventrägers eines Rotors einer Rundläuferpresse mit mindestens einem Steuerkurvenelement, gemäß dem Oberbegriff des Anspruchs 13.

Rundläuferpressen bzw. Rundläufertablettenpressen besitzen in der Regel einen Rotor mit einer oberen und unteren Stempelführung und einer dazwischen angeordneten Matrizenscheibe. Weiterhin sind obere und untere Steuerkurven vorgesehen, die mit den Köpfen von oberen und unteren Pressstempeln der Rundläuferpresse zusammenwirken, um insbesondere den Axialhub der oberen und unteren Pressstempel zu generieren und zu führen. Die Steuerkurven sind in der Regel aus mehreren Steuerkurvenelementen aufgebaut, die an einem geeigneten Kurventräger befestigt sind. Den unterschiedlichen Stationen der Rundläuferpresse sind unterschiedliche Steuerkurvenelemente zugeordnet, beispielsweise Füllkurvenelemente, Dosierkurvenelemente, Druckkurvenelemente und Auswerferkurvenelemente. Es ist von entscheidender Bedeutung, dass für die jeweils vorgesehene Ausstattung der Rundläuferpresse mit Stationen die richtige Bestückung der Kurventräger mit Steuerkurvenelementen erfolgt. Um eine fehlerhafte Bestückung der Kurventräger mit Steuerkurvenelementen auszuschließen, sind die Kurventräger so aufgebaut, dass nur eine bestimmte Kombination aus Steuerkurvenelementen an diesen angebracht werden kann.

Mit derartigen Rundläufertablettenpressen sollen unterschiedliche Produktionszustände realisierbar sein. Beispielsweise soll zwischen der Herstellung von Einschichttabletten und Mehrschichttabletten gewechselt werden können. Für einen solchen Wechsel ist in der Regel auch ein Wechsel der Steuerkurvenelemente erforderlich. Eine flexibel einzusetzende Rundläufertablettenpresse muss daher unterschiedliche Steuerkurvenkombinationen erlauben. Aufgrund der speziellen Ausgestaltung der Kurventräger für jeweils eine Steuerkurvenkombination sind für unterschiedliche Steuerkurvenkombinationen daher unterschiedliche Kurventräger erforderlich. Der Wechsel eines Kurventrägers ist jedoch aufwendig. Die exakte Position des Kurventrägers ist für den Betrieb der Rundläuferpresse von entscheidender Bedeutung. Daher besitzen die Kurventräger aufwendige Befestigungsmittel mit einer Mehrzahl von Befestigungspunkten. Darüber hinaus werden im Betrieb sämtliche auf die Steuerkurven wirkenden Kräfte von den Kurventrägern aufgenommen. Aufgrund der somit hohen im Betrieb auftretenden Belastungen weisen die Kurventräger eine stabile Konstruktion und Lagerung sowie ein hohes Gewicht auf. Diese Ausgestaltung der Kurventräger macht einen Wechsel derselben aufwendig.

DE 20 2005 017 516 U1 beschreibt eine Rundläuferpresse, bei der jede Baugruppe bzw. jedes Einzelteil mit einem Transponder versehen ist zur Identifizierung der Baugruppe bzw. des Einzelteils. Die Rundläuferpresse verfügt über eine Sende- und Empfangseinheit zum Auslesen der Transponder.

JP 2001-219329A beschreibt eine spanende Werkzeugmaschine zur Herstellung von Leiterplatten, umfassend mehrere mit unterschiedlichen Werkzeugen bestückte Werkzeugmagazine. Die Werkzeugmagazine verfügen jeweils über mehrere unterschiedlich voneinander beabstandete Eingriffsöffnungen, die mit hervorstehenden Stiften eines Positioniertischs korrespondieren, um eine korrekte Positionierung der Werkzeugmagazine zu ermöglichen.

US 2009/0283467 A1 betrifft einen Tank mit einer Filterverbindung zur Verbindung einer Filterkartusche mit dem Inneren des Tanks. Ein Verbindungsstück weist Öffnungen in Form von Schlüssellöchern sowie zu den Öffnungen korrespondierende Codiervorsprünge auf. Beim Einsetzen einer Filterkartusche in das Verbindungsstück bilden durch Rotation der Filterkartusche die Öffnungen gemeinsam mit den Codiervorsprüngen eine Codierstruktur, welche nur ein Einsetzen einer Filterkartusche mit entsprechenden Strukturen erlaubt.

US 2009/139417 A1 beschreibt eine Rundläuferpresse gemäß dem Oberbegriff des Anspruchs 1.

Ausgehend von dem erläuterten Stand der Technik liegt der Erfindung die Aufgabe zugrunde, einen flexiblen Wechsel zwischen unterschiedlichen Kombinationen von Steuerkurven in einfacher und betriebssicherer Weise zu ermöglichen.

Die Erfindung löst diese Aufgabe durch die Gegenstände der Ansprüche 1 und 13. Vorteilhafte Ausgestaltungen finden sich in den abhängigen Ansprüchen, der Beschreibung und den Figuren.

Für einen Rotor der eingangs genannten Art löst die Erfindung die Aufgabe durch die im kennzeichnenden Teil des Anspruchs 1 angegebenen Merkmale.

Für ein Verfahren der eingangs genannten Art löst die Erfindung die Aufgabe dadurch, dass mindestens ein Codierelement an dem Rotor oder einem damit verbundenen Bauteil befestigt wird und, dass mindestens ein Steuerkurvenelement an dem Kurventräger befestigt wird, wobei die Position des Steuerkurvenelements an dem Kurventräger durch mechanische Codiermittel des mindestens einen Codierelements eindeutig vorgegeben wird.

Wie eingangs erläutert, besitzen Rundläuferpressen, insbesondere Rundläufertablettenpressen, neben oberen und unteren Stempelführungen und einer dazwischen angeordneten Matrizenscheibe in der Regel obere und untere Kurventräger, an denen jeweils obere und untere Steuerkurvenelemente befestigt werden. Die Steuerkurvenelemente wirken mit den Köpfen von oberen und unteren Pressstempeln der Rundläuferpresse zusammen, um insbesondere den Axialhub der Pressstempel zu generieren und zu führen. Wie weiterhin eingangs erläutert, sind den unterschiedlichen Stationen der Rundläuferpresse, beispielsweise Füllstation(en), Dosierstation(en), Druckstation(en) und Auswerferstation(en), unterschiedliche Steuerkurvenelemente, beispielsweise Füllkurvenelemente, Dosierkurvenelemente, Druckkurvenelemente und Auswerferkurvenelemente, zugeordnet. In der Regel werden jeweils mehrere Steuerkurvenelemente an dem oberen Kurventräger und an dem unteren Kurventräger befestigt, die dann zusammen eine obere und eine untere Steuerkurve bilden.

Gemäß der Erfindung ist mindestens ein Codierelement vorgesehen, welches mit seinen Befestigungsmitteln insbesondere an dem Kurventräger befestigt werden kann bzw. befestigt wird. Das mindestens eine Codierelement kann dabei auch ein Teil einer mehrteiligen Codiervorrichtung sein, die aus mehreren Codierelementen besteht. Die Befestigungsmittel können eine lösbare Befestigung des Codierelements oder eine dauerhafte Befestigung des Codierelements an dem Rotor oder einem damit verbundenen Bauteil bereitstellen. Wie eingangs ausgeführt, kann ein herkömmlicher Rotor einen Satz unterschiedlicher Kurventräger für unterschiedliche Steuerkurvenkombinationen aufweisen. Die Befestigungsmittel des erfindungsgemäßen Codierelements können daher so ausgestaltet sein, dass sie grundsätzlich an jedem an dem Rotor vorzusehenden Kurventräger befestigt werden können.

Im Gegensatz zum Stand der Technik ist erfindungsgemäß für einen Wechsel der Steuerkurvenelemente zwischen unterschiedlichen Betriebsarten bzw. Produktionszuständen ein Austausch des Kurventrägers nicht mehr erforderlich. Vielmehr kann erfindungsgemäß für die Befestigung unterschiedlicher Steuerkurvenelemente derselbe Kurventräger verwendet werden. Dazu umfasst das erfindungsgemäße Codierelement Codiermittel, die eine eindeutige Positionszuordnung für ein Steuerkurvenelement bereitstellen, welches an dem Kurventräger befestigt werden soll. Für jedes Steuerkurvenelement gibt es erfindungsgemäß also eine eindeutig definierte Montageposition an dem Kurventräger, die durch das Codierelement festgelegt wird. Um zwischen unterschiedlichen Anordnungen von Steuerkurvenelementen zu wechseln, muss somit lediglich die durch das Codierelement bereitgestellte Codierung geändert werden. Wie unten noch näher ausgeführt werden wird, kann dies beispielsweise durch einen Wechsel des Codierelements oder eine Verstellung des Codierelements geschehen. Die Befestigung der Steuerkurvenelemente und die Aufnahme der im Betrieb von den Steuerkurvenelementen übertragenen Kräfte erfolgt dabei weiterhin über den Kurventräger. Die Codierung erfolgt also getrennt von der form- und/oder kraftschlüssigen Verbindung zwischen den Steuerkurvenelementen und dem Kurventräger.

Der erfindungsgemäße Einsatz eines Codierelements ermöglicht eine flexible Nutzung einer Rundläuferpresse bzw. einzelner Rotorpakete für eine solche Rundläuferpresse. So kann ein Rotorpaket mit weitgehend beliebigen Steuerkurvenkombinationen ausgestattet werden, ohne dass ein Ausbau und Wechsel eines Kurventrägers erforderlich ist. Da die Kraftübertragung insbesondere weiterhin zwischen Steuerkurvenelement und Kurventräger erfolgt, muss das Codierelement selbst keine Kräfte aufnehmen. Es kann daher gewichtssparend und konstruktiv einfach hinsichtlich seiner Positionierung und Befestigung aufgebaut sein. Auch bestehen hinsichtlich der Anordnung des Codierelements nicht dieselben Genauigkeitsanforderungen wie für die Kurventräger. Gleichzeitig ist durch die erfindungsgemäße Codierung und die hierdurch bereitgestellte eindeutige Positionszuordnung die Montage der Steuerkurvenelemente erleichtert. Montagefehler werden ausgeschlossen. Da darüber hinaus derselbe Kurventräger für die unterschiedlichen Steuerkurvenkombinationen verwendet werden kann und auch die Steuerkurvenelemente unterschiedlicher Kurvenkombinationen gleich aufgebaut sein können, wird eine hohe Anzahl von Gleichteilen erreicht. Dies hat erhebliche Vorteile hinsichtlich Verfügbarkeit, Herstellkosten und Konstruktionsaufwand.

Das erfindungsgemäße Codierelement kann einstückig oder mehrteilig ausgebildet sein. Ist es mehrteilig ausgebildet, kann es beispielsweise aus mehreren Segmenten, vorzugsweise aus Kreis- oder Kreisringsegmenten, bestehen. Eine einstückige Ausbildung, vorzugsweise in Form einer Kreisscheibe oder eines Kreisringes, hat den Vorteil, dass Fehler bei der Befestigung des Codierelements an dem Rotor oder dem damit verbundenen Bauteil, welche zu einer Fehlanordnung der Steuerkurvenelemente führen würden, sicherer vermieden werden.

Wie erläutert, hat eine Rundläuferpresse in der Regel einen oberen und einen unteren Kurventräger für obere und untere Steuerkurvenelemente. Es können beide Kurventräger jeweils mindestens ein erfindungsgemäßes Codierelement aufweisen. Eine Rundläuferpresse hat darüber hinaus eine so genannte Matrizenscheibe mit Aufnahmen, insbesondere Matrizenbohrungen. Die Matrizenscheibe kann einstückig ausgebildet sein oder aus einzelnen Segmenten gebildet sein. In die Aufnahmen oder Matrizenbohrungen der Matrizenscheibe können Matrizenhülsen eingesetzt sein. Dies ist jedoch nicht zwingend erforderlich, sondern die Pressstempel können auch unmittelbar mit den Aufnahmen oder Matrizenbohrungen zusammenwirken. Weiterhin kann eine Mehrzahl von Steuerkurvenelementen an dem Kurventräger befestigt werden, wobei die Position sämtlicher dieser Steuerkurvenelemente an dem Kurventräger durch die Codiermittel des Codierelements eindeutig vorgegeben wird. Nach der Erfindung sind die Codiermittel mechanische Codiermittel. Als mechanische Codiermittel kommen beispielsweise Ausnehmungen und/oder Vorsprünge in Frage. Die Vorsprünge können beispielsweise in Form von Codiernasen vorliegen. Auch denkbar sind beispielsweise Codierlaschen. Die Ausnehmungen können beispielsweise in Form von Kerbungen oder kreisringsegmentförmigen Randausnehmungen ausgebildet sein. Neben mechanischen Codiermitteln sind aber auch andere nicht beanspruchte Codiermittel denkbar, beispielsweise Farbcodierungen, Codierungen über Transponder oder ähnliches.

Das Codierelement kann nach einer weiteren Ausgestaltung eine Ringform oder eine Scheibenform besitzen. Es kann dann besonders einfach auf den sich in der Regel in Umfangsrichtung des Rotors erstreckenden Kurventräger aufgesetzt werden. Die Codiermittel können beispielsweise mehrere über den Umfang des Codierelements verteilte Vorsprünge und/oder Ausnehmungen der vorstehend beschriebenen Art umfassen.

Eine andere Ausgestaltung sieht vor, dass mehrere Codierelemente vorgesehen sind, wobei die Codierelemente unterschiedlich ausgebildet und auswechselbar sind. Dies insbesondere in der Weise, dass für eine andere Bestückung des Rotors mit Steuerkurvenelementen, bedingt durch eine andere geforderte Betriebsart bzw. einen anderen geforderten Produktionszustand, mindestens ein für diese Bedingungen ausgelegtes Codierelement an dem Rotor unmittelbar oder mittelbar und insbesondere eindeutig vorbestimmt lagefixiert befestigt ist.

Nach einer weiteren Ausgestaltung kann vorgesehen sein, dass die Codiermittel des Codierelements zwischen mindestens zwei unterschiedlichen Codiereinstellungen verstellbar sind, wobei die Codiermittel in den mindestens zwei unterschiedlichen Codiereinstellungen unterschiedliche Positionen des mindestens einen Steuerkurvenelements an dem Kurventräger jeweils eindeutig vorgeben. Entsprechend können die Codiermittel des Codierelements für einen Wechsel der Bestückung des Kurventrägers mit Steuerkurvenelementen zwischen mindestens zwei unterschiedlichen Codiereinstellungen verstellt werden, wobei die Codiermittel in den mindestens zwei unterschiedlichen Codiereinstellungen unterschiedliche Positionen der Steuerkurvenelemente an dem Kurventräger jeweils eindeutig vorgeben. Bei dieser Ausgestaltung kann das Codierelement fest mit dem Rotor oder dem Kurventräger verbunden sein. Eine andere Codierung für eine andere Bestückung des Rotors mit Steuerkurvenelementen in einer anderen Betriebsart kann dann durch eine Verstellung der Codiermittel zwischen den unterschiedlichen Codiereinstellungen bzw. Codierpositionen erfolgen. Je nach gewählter Einstellung wird dann die Befestigung eines bestimmten Steuerkurvenaufbaus an dem Kurventräger zugelassen.

Nach einer weiteren Ausgestaltung kann das Codierelement Identifikationsmittel umfassen mit Identifikationsdaten, die eine eindeutige Identifikation des Codierelements erlauben. Die Identifikationsmittel können nach einer weiteren Ausgestaltung Übertragungsmittel umfassen, mit denen die Identifikationsdaten an eine Steuereinrichtung der Rundläuferpresse übertragen werden können. Auf Grundlage der erfolgten und der Steuereinrichtung mitgeteilten Identifikation des jeweiligen Codierelements kann die Steuereinrichtung ein geeignetes Steuerprogramm für den Betrieb der Rundläuferpresse passend zu der jeweils durch das Codierelement vorgegebenen Steuerkurvenkonfiguration auswählen. Außerdem kann auf diese Weise überprüft werden, ob für die jeweils gewünschte Betriebsart der Rundläuferpresse das korrekte Codierelement und damit die korrekte Steuerkurvenanordnung ausgewählt wurde. Zu diesen Zwecken können die Identifikationsmittel eine Speichereinrichtung umfassen. Die Übertragungsmittel können grundsätzlich eine drahtgebundene oder eine drahtlose Verbindung zu der Steuereinrichtung der Rundläuferpresse umfassen. Die Übertragungsmittel können z.B. einen oder mehrere Transponder umfassen.

Es kann vorgesehen sein, dass das Codierelement an dem Rotor oder einem damit verbundenen Bauteil vorbestimmt lagefixiert und befestigt wird. Lagefixierung bezeichnet dabei sowohl ein unverrückbares, vorzugsweise formschlüssiges Festhalten unmittelbar oder mittelbar am Rotor, als auch eine definierte und eindeutige Ausrichtung gegenüber dem Rotor. Das Codierelement kann insbesondere zweite Codiermittel umfassen, die eine eindeutige Position des Codierelements für die Befestigung an dem Rotor oder dem damit verbundenen Bauteil vorgeben. Die zweiten Codiermittel können wiederum mechanische Codiermittel sein. Wiederum können die zweiten Codiermittel hierzu einen Vorsprung oder eine Ausnehmung der vorstehend beschriebenen Art umfassen. Durch diese Ausgestaltung wird eine Position des Codierelements an dem Rotor oder dem damit verbundenen Bauteil, beispielsweise dem Kurventräger, eindeutig vorgegeben. Es wird also eine Fehlpositionierung des Codierelements und eine dadurch verursachte Fehlpositionierung der Steuerkurvenelemente vermieden.

Eine Steuerkurvenanordnung für einen Rotor einer Rundläuferpresse umfasst mindestens ein an einem der Kurventräger befestigtes Steuerkurvenelement und mindestens ein erfindungsgemäßes Codierelement, wobei das Steuerkurvenelement Codiermittel umfasst, die zu den Codiermitteln des Codierelements zum eindeutigen Vorgeben der Position des Steuerkurvenelements an dem Kurventräger korrespondieren. Die Codiermittel des Steuerkurvenelements wirken also mit den (ersten) Codiermitteln des Codierelements derart zusammen, dass die Position des Steuerkurvenelements an dem Kurventräger eindeutig festgelegt ist. Entsprechend sind auch die Codiermittel des Steuerkurvenelements mechanisch. Wiederum können sie einen oder mehrere Vorsprünge und/oder Ausnehmungen der vorstehend beschriebenen Art aufweisen.

Die Steuerkurvenanordnung kann mehrere Codierelemente umfassen, wobei die Befestigungsmittel jeweils eine lösbare Befestigung der Codierelemente an dem Rotor oder einem damit verbundenen Bauteil bereitstellen, wobei die Codierelemente unterschiedliche Codiermittel umfassen, und wobei die unterschiedlichen Codiermittel unterschiedliche Positionen des mindestens einen Steuerkurvenelements an dem Kurventräger jeweils eindeutig vorgeben. Entsprechend können für einen Wechsel der Bestückung des Kurventrägers mit Steuerkurvenelementen unterschiedliche Codierelemente an dem Rotor oder einem damit verbundenen Bauteil befestigt werden, wobei die unterschiedlichen Codierelement unterschiedliche Codiermittel umfassen und wobei die unterschiedlichen Codiermittel unterschiedliche Positionen der Steuerkurvenelementen an dem Kurventräger jeweils eindeutig vorgeben. Bei dieser Ausgestaltung wird also durch einen Wechsel zwischen unterschiedlichen Codierelementen die für eine jeweils gewünschte Betriebsart der Rundläuferpresse geeignete Codierung und damit geeignete Steuerkurvenanordnung ausgewählt. Jedes Codierelement kann also für eine bestimmte Positionsanordnung der Steuerkurvenelemente vorgesehen sein. Auf diese Weise ist die Codierung des Rotors für unterschiedliche Betriebsarten besonders einfach und es wird eine besonders hohe Betriebssicherheit gegen eine Fehlpositionierung der Steuerkurvenelemente erreicht.

Erfindungsgemäß umfasst der Rotor eine obere und eine untere Stempelführung für obere und untere Pressstempel sowie eine zwischen den Stempelführungen angeordnete Matrizenscheibe, weiter umfassend einen oberen und einen unteren Kurventräger, an dem jeweils mindestens ein Steuerkurvenelement befestigt ist, und umfassend mindestens eine in der erfindungsgemäßen Weise ausgebildete obere Steuerkurvenanordnung und/oder mindestens eine in der erfindungsgemäßen Weise ausgebildete untere Steuerkurvenanordnung. Es kann weiter vorgesehen sein, dass die Befestigungsmittel der Codierelemente zur Befestigung an dem oberen und/oder dem unteren Kurventräger vorgesehen sind und, dass der obere Kurventräger und/oder der untere Kurventräger zu den zweiten Codiermitteln der Codierelemente korrespondierende Codiermittel umfasst. Obere und untere Kurventräger wirken also mit dem ihnen jeweils zugeordneten Codierelement derart zusammen, dass das jeweilige Codierelement in einer bestimmten Position an dem jeweiligen Kurventräger befestigt wird. Hierdurch wird wiederum eine Fehlpositionierung der Steuerkurvenelemente vermieden. Auch die Codiermittel des Kurventrägers können mechanisch sein. Weiterhin können sie wiederum einen oder mehrere Vorsprünge und/oder Ausnehmungen der vorstehend beschriebenen Art aufweisen.

Das erfindungsgemäße Verfahren wird mit dem erfindungsgemäßen Rotor durchgeführt.

Ausführungsbeispiele der Erfindung werden nachfolgend anhand von Figuren näher erläutert. Es zeigen schematisch:
- Fig. 1: einen Rotor einer Rundläufertablettenpresse nach dem Stand der Technik,
- Fig. 2: einen erfindungsgemäßen Rotor in einer ersten Betriebsart in einer Draufsicht,
- Fig. 3: den Rotor aus Fig. 2 in einer zweiten Betriebsart in einer Draufsicht, und
- Fig. 4: ein Meridianschnitt durch den in Figur 3 gezeigten Rotor entlang des Schnittverlaufs A-B in Figur 3.

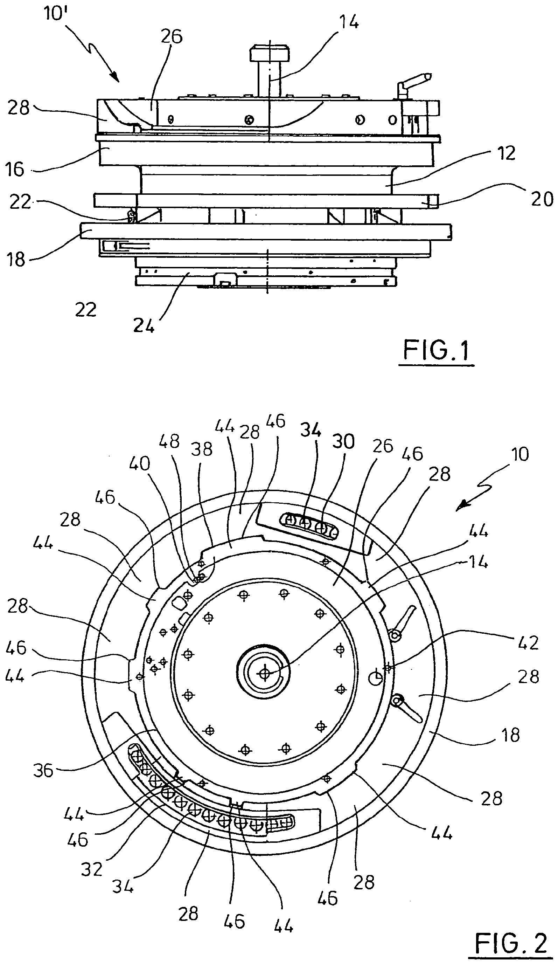

Soweit nichts anderes angegeben ist, bezeichnen in den Figuren gleiche Bezugszeichen gleiche Gegenstände. In Fig. 1 ist ein herkömmlicher Rotor 10' einer Rundläuferpresse bzw. einer Rundläufertablettenpresse gezeigt. Er umfasst ein Rotorelement 12, welches über einen nicht gezeigten Drehantrieb um die in Fig. 1 bei dem Bezugszeichen 14 gezeigte Drehachse, in der Regel eine vertikale Achse, gedreht werden kann. Der Rotor 10' umfasst außerdem eine obere Stempelführung 16 für obere Pressstempel und eine untere Stempelführung 18 für untere Pressstempel. In den oberen und unteren Stempelführungen 16, 18 werden die Schäfte der Pressstempel in axialer Richtung beweglich geführt. Die Pressstempel sind in Fig. 1 aus Gründen der Übersichtlichkeit nicht dargestellt. Zwischen der oberen Stempelführung 16 und der unteren Stempelführung 18 ist eine Matrizenscheibe 20 angeordnet. Die Befestigung der Matrizenscheibe 20 an der unteren Stempelführung 18 erfolgt in dem dargestellten Beispiel über miteinander in Eingriff stehende Spannkeile 22. Die Matrizenscheibe 20 kann einteilig ausgebildet sein oder aus mehreren Segmenten bestehen. Die Matrizenscheibe 20 besitzt Aufnahmen für die Pressstempel, insbesondere Matrizenbohrungen. In den Aufnahmen können Matrizenhülsen angeordnet sein. Dies ist jedoch nicht zwingend erforderlich; ebenso können die Pressstempel unmittelbar mit den Matrizenbohrungen zusammenwirken. An dem in Fig. 1 unteren Ende besitzt der Rotor einen unteren Kurventräger 24. In Fig. 1 oberhalb der oberen Stempelführung 16 ist ein oberer Kurventräger 26 gezeigt. An dem oberen Kurventräger 26 sind mehrere Steuerkurvenelemente 28 befestigt. Die Steuerkurvenelemente 28 besitzen jeweils eine Ausnehmung, vorliegend eine Führungsausnehmung, in der die Pressstempel mit ihren Köpfen derart geführt werden, dass die Axialbewegung der Pressstempel im Betrieb der Rundläuferpresse vorgegeben wird. Es versteht sich, dass an dem unteren Kurventräger 24 entsprechende untere Steuerkurvenelemente vorgesehen sein können.

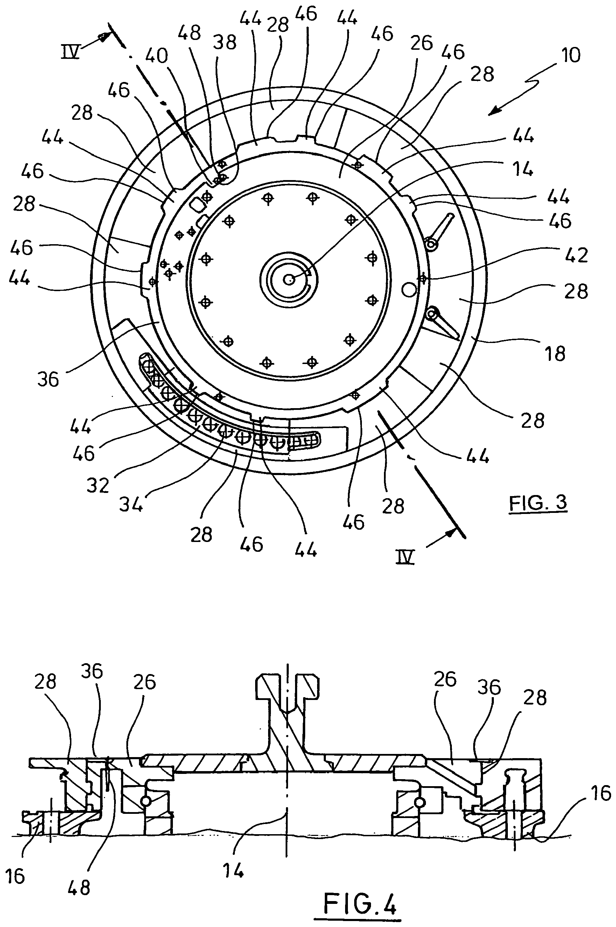

In Fig. 2 ist ein erfindungsgemäßer Rotor 10 einer Rundläuferpresse bzw. einer Rundläufertablettenpresse gezeigt. Dieser entspricht in seiner Ausgestaltung weitgehend dem in Fig. 1 gezeigten Rotor 10'. Zu erkennen ist in Fig. 2, dass die Steuerkurvenelemente 28 mehrere sich jeweils über einen Teil des Umfangs des Rotors erstreckende Steuerkurvensegmente sind. Es ist weiter zu erkennen, dass im Bereich von Druckstationen der Rundläuferpresse die Steuerkurvenelemente in sich geschlossene, als Durchbrüche ausgebildete Ausnehmungen 30, 32 aufweisen. Im Bereich dieser Ausnehmungen 30, 32 können die oberhalb der oberen Steuerkurvenelemente 28 angeordneten Druckrollen direkt auf die in Fig. 2 gezeigten Pressstempel 34 einwirken. Im Unterschied zu dem in Fig. 1 gezeigten bekannten Rotor 10' weist der erfindungsgemäße Rotor 10 aus Fig. 2 ein Codierelement 36 in Form eines Codierrings auf. Das Codierelement 36 wird in einer vorgegebenen Drehposition gegenüber dem Kurventräger 26 lagefixiert und an diesem befestigt. Hierzu weist der Kurventräger 26 eine Randausnehmung 38 auf. Das Codierelement 36 besitzt einen korrespondierenden radial innenseitigen Vorsprung 40, der in der korrekten Drehposition des Codierelements 36 in der radial außenseitigen Ausnehmung 38, vorliegend einer Randausnehmung, des Kurventrägers 26 aufgenommen wird. Über mehrere Verbindungsmittel 42, vorzugsweise Schraubverbindungen, wird das Codierelement 36 in dieser Position mit dem Kurventräger 26 verbunden. Das Codierelement 36 umfasst darüber hinaus über seinen Umfang verteilt mehrere radial außenseitige Vorsprünge 44. Diese Vorsprünge 44 bilden Codiermittel, die mit korrespondierenden radial innenseitigen Ausnehmungen 46, vorliegend Randausnehmungen, der Steuerkurvenelemente 28 zusammenwirken. Insbesondere wird durch geeignete Auswahl und Anordnung der Vorsprünge 44 und der Ausnehmungen bzw. Randausnehmungen 46 für jedes Steuerkurvenelement 28 eine eindeutig definierte Montageposition zur Lagefixierung und Befestigung an dem Kurventräger 26 vorgegeben. Wie insbesondere in der Schnittansicht in Fig. 4 zu erkennen, erfolgt die Befestigung der Steuerkurvenelemente 28 dabei weiterhin an dem Kurventräger 26. Das Codierelement 36 nimmt an der Befestigung der Steuerkurvenelemente 28 an dem Kurventräger 26 nicht teil. Auch die im Betrieb auftretenden Kräfte werden von den Steuerkurvenelementen 28 im Wesentlichen vollständig in den Kurventräger 26 eingeleitet. Das Codierelement 36 besitzt im Vergleich zu dem Kurventräger 26 und den Steuerkurvenelementen 28 nur eine geringe Ausdehnung in axialer Richtung und dient in einer bevorzugten Ausführungsform als ringscheibenförmige Schablone lediglich zur Festlegung der Position der entsprechenden Steuerkurvenelemente 28.

In Fig. 4 sind außerdem Identifikationsmittel 48 des Codierelements 36 zu erkennen. Sie enthalten Identifikationsdaten, die eine eindeutige Identifikation des jeweils in den Rotor 10 eingesetzten Codierelements 36 erlauben. Die Identifikationsmittel 48 umfassen außerdem Übertragungsmittel, mit denen die Identifikationsdaten drahtlos oder drahtgebunden an eine nicht dargestellte Steuereinrichtung einer mit dem Rotor 10 zu bestückenden Rundläuferpresse übertragen werden können. Auf dieser Grundlage kann von der Steuereinrichtung überprüft werden, ob das für den jeweiligen Betriebszustand der Rundläuferpresse geeignete Codierelement 36 eingebaut ist. Zum anderen kann die Steuereinrichtung abhängig von dem verbauten Codierelement 36 das korrekte Steuerprogramm für die Rundläuferpresse auswählen.

Während der Rotor 10 in Fig. 2 für einen Betrieb einer Rundläuferpresse mit drei Druckstationen im Bereich der Ausnehmungen 30, 32 konfiguriert ist, ist in Fig. 3 der Rotor aus Fig. 2 in einer anderen Konfiguration dargestellt. Bei der Konfiguration nach Fig. 3 ist der Betrieb der Rundläuferpresse mit nur zwei Druckstationen vorgesehen. Hierzu weisen die in Fig. 3 eingesetzten Steuerkurvenelemente 28 nur eine Ausnehmung 32 auf. Zum Einstellen der Konfiguration aus Fig. 3 wurde gegenüber dem in Fig. 2 gezeigten Betriebszustand ein anderes Codierelement 36 an dem Kurventräger 26 befestigt. Dieses Codierelement 36 ist wiederum als Codierring ausgebildet und unterscheidet sich von dem in Fig. 2 gezeigten Codierelement 36 lediglich hinsichtlich der Ausgestaltung und Anordnung der Vorsprünge 44 an seinem Umfang. Diese geänderte Ausbildung der Codiermittel des Codierelements 36 bedingt eine andere Anordnung der Steuerkurvenelemente 28, wobei in dem Beispiel in Fig. 3 gegenüber dem Beispiel in Fig. 2 insbesondere die zwei Steuerkurvensegmente übergreifende Ausnehmung 30 wegfällt.

Durch einen Austausch der Codierelemente 36 kann eine Vielzahl unterschiedlicher Konfigurationen der Steuerkurvenelemente 28 eingestellt werden. Dabei kann der Kurventräger 26 jederzeit an dem Rotor 10 verbleiben. Eine aufwendige Demontage des Kurventrägers 26 ist nicht erforderlich. Es versteht sich, dass an einem unteren Kurventräger des Rotors 10 entsprechende Codierelemente 36 zur Konfiguration unterschiedlicher Anordnungen von Steuerkurvenelementen 28 vorgesehen sein können.

## Patentansprüche

1. Rotor (10) für eine Rundläuferpresse, umfassend eine obere und eine untere Stempelführung (16, 18) für obere und untere Pressstempel (34) sowie eine zwischen den Stempelführungen (16, 18) angeordnete Matrizenscheibe (20), weiter umfassend einen oberen Kurventräger (26) und einen unteren Kurventräger (24), an denen jeweils mindestens ein Steuerkurvenelement (28) befestigt ist, **dadurch gekennzeichnet, dass** mindestens ein Codierelement (36) für die Bestückung mindestens eines der Kurventräger (26) vorgesehen ist, wobei das mindestens eine Codierelement (36) Befestigungsmittel umfasst, mit denen es an dem Rotor (10) oder einem damit verbundenen Bauteil befestigbar ist und das mindestens eine Codierelement (36) mechanische Codiermittel aufweist, durch die die Position des mindestens einen Steuerkurvenelements (28) an dem Kurventräger (26) eindeutig vorgegeben ist, wobei das Steuerkurvenelement (28) Codiermittel umfasst, die zu den Codiermitteln des Codierelements (36) zum eindeutigen Vorgeben der Position des Steuerkurvenelements (28) an dem Kurventräger (26) korrespondieren.

2. Rotor nach Anspruch 1, **dadurch gekennzeichnet, dass** durch die Codiermittel des Codierelements (36) die Position einer Mehrzahl von Steuerkurvenelementen (28) an dem Kurventräger (26) eindeutig vorgegeben ist.

3. Rotor nach einem der vorhergehenden Ansprüche, **dadurch gekennzeichnet, dass** das Codierelement (36) eine Ringform oder eine Scheibenform besitzt.

4. Rotor nach Anspruch 3, **dadurch gekennzeichnet, dass** die Codiermittel des Codierelements (36) mehrere über den Umfang des Codierelements (36) verteilte Vorsprünge (44) und/oder Ausnehmungen aufweisen.

5. Rotor nach einem der vorhergehenden Ansprüche, **dadurch gekennzeichnet, dass** die Codiermittel des Codierelements (36) zwischen mindestens zwei unterschiedlichen Codiereinstellungen verstellbar sind, wobei die Codiermittel in den mindestens zwei unterschiedlichen Codiereinstellungen unterschiedliche Positionen des mindestens einen Steuerkurvenelements (28) an dem Kurventräger (26) jeweils eindeutig vorgeben.

6. Rotor nach einem der Ansprüche 1 bis 4, **dadurch gekennzeichnet, dass** mehrere Codierelemente (36) vorgesehen sind, wobei die Codierelemente (36) unterschiedlich ausgebildet und auswechselbar sind.

7. Rotor nach einem der vorhergehenden Ansprüche, **dadurch gekennzeichnet, dass** das Codierelement (36) Identifikationsmittel (48) umfasst mit Identifikationsdaten, die eine eindeutige Identifikation des Codierelements (36) erlauben.

8. Rotor nach Anspruch 7, **dadurch gekennzeichnet, dass** die Identifikationsmittel (48) Übertragungsmittel umfassen, mit denen die Identifikationsdaten an eine Steuereinrichtung der Rundläuferpresse übertragen werden können.

9. Rotor nach einem der vorhergehenden Ansprüche, **dadurch gekennzeichnet, dass** das Codierelement (36) weiterhin zweite Codiermittel umfasst, die eine eindeutige Position des Codierelements (36) für die Befestigung an dem Rotor (10) oder einem damit verbundenen Bauteil vorgeben.

10. Rotor nach Anspruch 9, **dadurch gekennzeichnet, dass** die zweiten Codiermittel mechanische Codiermittel sind.

11. Rotor nach einem der vorhergehenden Ansprüche, **dadurch gekennzeichnet, dass** mehrere Codierelemente (36) vorgesehen sind, wobei die Befestigungsmittel jeweils eine lösbare Befestigung der Codierelemente (36) an dem Rotor (10) oder einem damit verbundenen Bauteil bereitstellen, wobei die Codierelemente (36) unterschiedliche Codiermittel umfassen, und wobei die unterschiedlichen Codiermittel unterschiedliche Positionen des mindestens einen Steuerkurvenelements (28) an dem Kurventräger (26) jeweils eindeutig vorgeben.

12. Rotor nach einem der Ansprüche 9 oder 10, **dadurch gekennzeichnet, dass** die Befestigungsmittel der Codierelemente (36) zur Befestigung an dem oberen und/oder dem unteren Kurventräger (26) vorgesehen sind und, dass die oberen und/oder unteren Kurventräger (26) zu den zweiten Codiermitteln des Codierelements (36) korrespondierende Codiermittel umfassen.

13. Verfahren zum Bestücken eines Kurventrägers (26) eines Rotors (10) einer Rundläuferpresse mit mindestens einem Steuerkurvenelement (28), **gekennzeichnet durch** die Schritte:
- mindestens ein Codierelement (36) wird an dem Rotor (10) oder einem damit verbundenen Bauteil befestigt,
- mindestens ein Steuerkurvenelement (28) wird an dem Kurventräger (26) befestigt, wobei die Position des Steuerkurvenelements (28) an dem Kurventräger (26) durch mechanische Codiermittel des mindestens einen Codierelements (36) eindeutig vorgegeben wird.

14. Verfahren nach Anspruch 13, **dadurch gekennzeichnet, dass** eine Mehrzahl von Steuerkurvenelementen (28) an dem Kurventräger (26) befestigt wird, wobei die Position sämtlicher Steuerkurvenelemente (28) an dem Kurventräger (26) durch die Codiermittel des Codierelements (36) eindeutig vorgegeben wird.

15. Verfahren nach Anspruch 14, **dadurch gekennzeichnet, dass** die Codiermittel des Codierelements (36) für einen Wechsel der Bestückung des Kurventrägers (26) mit Steuerkurvenelementen (28) zwischen mindestens zwei unterschiedlichen Codiereinstellungen verstellt werden, wobei die Codiermittel in den mindestens zwei unterschiedlichen Codiereinstellungen unterschiedliche Positionen der Steuerkurvenelemente (28) an dem Kurventräger (26) jeweils eindeutig vorgeben.

16. Verfahren nach Anspruch 14, **dadurch gekennzeichnet, dass** für einen Wechsel der Bestückung des Kurventrägers (26) mit Steuerkurvenelementen (28) unterschiedliche Codierelemente (36) an dem Rotor (10) oder einem damit verbundenen Bauteil befestigt werden, wobei die unterschiedlichen Codierelemente (36) unterschiedliche Codiermittel umfassen, und wobei die unterschiedlichen Codiermittel unterschiedliche Positionen der Steuerkurvenelemente (28) an dem Kurventräger (26) jeweils eindeutig vorgeben.

17. Verfahren nach einem der Ansprüche 13 bis 16, **dadurch gekennzeichnet, dass** das Codierelement (36) anhand von Identifikationsdaten eindeutig identifiziert wird.

18. Verfahren nach Anspruch 17, **dadurch gekennzeichnet, dass** die Identifikationsdaten zur Identifizierung des Codierelements (36) an eine Steuereinrichtung der Rundläuferpresse übertragen werden.

19. Verfahren nach einem der Ansprüche 13 bis 18, **dadurch gekennzeichnet, dass** ein Rotor (10) nach einem der Ansprüche 1 bis 12 verwendet wird.

## Claims

1. A rotor (10) for a rotary press comprising an upper and a lower punch guide (16, 18) for upper and lower press punches (34), as well as a die plate (20) arranged between the punch guides (16, 18), further comprising an upper cam carrier (26) and a lower cam carrier (24) on which at least one control cam element (28) is fastened in each case, **characterized in that** at least one coding element (36) is provided for equipping at least one of the cam carriers (26), wherein the at least one coding element (36) comprises fastening means by means of which it can be fastened to the rotor (10) or a component connected thereto, and the at least one coding element (36) has mechanical coding means by which the position of the at least one control cam element (28) on the cam carrier (26) is clearly specified, wherein the control cam element (28) comprises coding means that corresponds to the coding means of the coding element (36) for clearly specifying the position of the control cam element (28) on the cam carrier (26).

2. The rotor according to claim 1, **characterized in that** the coding means of the coding element (36) clearly specifies the position of a plurality of control cam elements (28) on the cam carrier (26).

3. The rotor according to one of the prior claims, **characterized in that** the coding element (36) possesses a ring shape or a disc shape.

4. The rotor according to claim 3, **characterized in that** the coding means of the coding element (36) has a plurality of projections (44) and/or recesses distributed over the perimeter of the coding element (36).

5. The rotor according to one of the prior claims, **characterized in that** the coding means of the coding element (36) can be adjusted between at least two different coding settings, wherein the coding means in the at least two different coding settings clearly specifies different positions of the at least one control cam element (28) on the cam carrier (26).

6. The rotor according to one of claims 1 to 4, **characterized in that** a plurality of coding elements (36) are provided, wherein the coding elements (36) are designed differently and are exchangeable.

7. The rotor according to one of the prior claims, **characterized in that** the coding element (36) comprises identification means (48) with identification data that allow a clear identification of the coding element (36).

8. The rotor according to claim 7, **characterized in that** the identification means (48) comprises transmission means by which the identification data can be transmitted to a control device of the rotary press.

9. The rotor according to one of the prior claims, **characterized in that** the coding element (36) comprises a second coding means that specifies a clear position of the coding element (36) for fastening to the rotor (10) or a component connected thereto.

10. The rotor according to claim 9, **characterized in that** the second coding means is mechanical coding means.

11. The rotor according to one of the prior claims, **characterized in that** a plurality of coding elements (36) are provided, wherein the fastening means provides a releasable fastening of the coding elements (36) to the rotor (10) or a component connected thereto, wherein the coding elements (36) comprise different coding means, and wherein the different coding means each clearly specify different positions of the at least one control cam element (28) on the cam carrier (26).

12. The rotor according to claims 9 or 10, **characterized in that** the fastening means of the coding elements (36) is provided to fasten to the upper and/or lower cam carrier (26), and the upper and/or lower cam carriers (26) comprise coding means corresponding to the second coding means of the coding element (36).

13. A method for equipping a cam carrier (26) of a rotor (10) of a rotary press with at least one control cam element (28), **characterized by** the steps:
- at least one coding element (36) is fastened to the rotor (10) or a component connected thereto,
- at least one control cam element (28) is fastened to the cam carrier (26), wherein the position of the control cam element (28) on the cam carrier (26) is clearly specified by mechanical coding means of the at least one coding element (36).

14. The method according to claim 13, **characterized in that** a plurality of control cam elements (28) are fastened to the cam carrier (26), wherein the position of all the control cam elements (28) on the cam carrier (26) is clearly specified by the coding means of the coding element (36).

15. The method according to claim 14, **characterized in that** the coding means of the coding element (36) is adjusted between at least two different coding settings to change the equipping of the cam carrier (26) with control cam elements (28), whereby the coding means in the at least two different coding settings clearly specify different positions of the control cam elements (28) on the cam carrier (26).

16. The method according to claim 14, **characterized in that** different coding elements (36) can be fastened to the rotor (10) or a component connected thereto to change the equipping of the cam carrier (26) with control cam elements (28), wherein the different coding elements (36) comprise different coding means, and wherein the different coding means clearly specify different positions of the control cam elements (28) on the cam carrier (26).

17. The method according to one of claims 13 to 16, **characterized in that** the coding element (36) is clearly identified by means of identification data.

18. The method according to claim 17, **characterized in that** the identification data for identifying the coding element (36) are transmitted to a control apparatus of the rotary press.

19. The method according to one of claims 13 to 18, **characterized in that** a rotor (10) according to one of claims 1 to 12 is used.

## Revendications

1. Rotor (10) pour une presse rotative, comportant un guide de poinçon supérieur et un guide de poinçon inférieur (16, 18) pour les poinçons de pressage inférieurs et supérieurs (34) ainsi qu'un disque à matrice (20) disposé entre les guides de poinçon (16, 18), comportant en outre un support de came supérieur (26) et un support de came inférieur (24), auxquels est fixé respectivement au moins un élément de came de commande (28), **caractérisé en ce qu'**il est prévu au moins un élément de codage (36) pour le montage de l'un au moins des supports de came (26), dans lequel l'au moins un élément de codage (36) comporte des moyens de fixation, avec lesquels celui-ci peut être fixé au rotor (10) ou à une pièce reliée à celui-ci, et l'au moins un élément de codage (36) présente des moyens de codage mécaniques permettant d'indiquer clairement la position de l'au moins un élément de came de commande (28) sur le support de came (26), dans lequel l'élément de came de commande (28) comporte des moyens de codage correspondant aux moyens de codage de l'élément de codage (36) pour indiquer clairement la position de l'élément de came de commande (28) sur le support de came (26).

2. Rotor selon la revendication 1, **caractérisé en ce que** la position d'une pluralité d'éléments de came de commande (28) sur le support de came (26) est indiqué clairement par les moyens de codage de l'élément de codage (36).

3. Rotor selon l'une des revendications précédentes, **caractérisé en ce que** l'élément de codage (36) possède une forme annulaire ou une forme de disque.

4. Rotor selon la revendication 3, **caractérisé en ce que** les moyens de codage de l'élément de codage (36) présentent plusieurs saillies (44) et/ou cavités réparties sur le pourtour de l'élément de codage (36).

5. Rotor selon l'une des revendications précédentes, **caractérisé en ce que** les moyens de codage de l'élément de codage (36) sont réglables entre au moins deux réglages de codage différents, dans lequel les moyens de codage indiquent respectivement clairement des positions différentes de l'au moins un élément de came de commande (28) sur le support de came (26) dans les au moins deux réglages de codage différents.

6. Rotor selon l'une des revendications 1 à 4, **caractérisé en ce qu'**il est prévu plusieurs éléments de codage (36), dans lequel les éléments de codage (36) sont conçus différemment et remplaçables.

7. Rotor selon l'une des revendications précédentes, **caractérisé en ce que** l'élément de codage (36) comporte des moyens d'identification (48) avec des données d'identification permettant d'identifier clairement l'élément de codage (36).

8. Rotor selon la revendication 7, **caractérisé en ce que** les moyens d'identification (48) comportent des moyens de transmission, avec lesquels les données d'identification peuvent être transmises à un système de commande de la presse rotative.

9. Rotor selon l'une des revendications précédentes, **caractérisé en ce que** l'élément de codage (36) comporte en outre des deuxièmes moyens de codage, lesquels indiquent une position univoque de l'élément de codage (36) pour la fixation au rotor (10) ou à une pièce reliée à celui-ci.

10. Rotor selon la revendication 9, **caractérisé en ce que** les deuxièmes moyens de codage sont des moyens de codage mécaniques.

11. Rotor selon l'une des revendications précédentes, **caractérisé en ce qu'**il est prévu plusieurs éléments de codage (36), dans lequel les moyens de fixation assurent respectivement une fixation amovible des éléments de codage (36) sur le rotor (10) ou sur une pièce reliée à celui-ci, dans lequel les éléments de codage (36) comportent des moyens de codage différents, et dans lequel les différents moyens de codage indiquent respectivement clairement des positions différentes de l'au moins un élément de came de commande (28) sur le support de came (26).

12. Rotor selon l'une des revendications 9 ou 10, **caractérisé en ce que** les moyens de fixation des éléments de codage (36) sont destinés à la fixation au support de came supérieur et/ou inférieur (26), et **en ce que** les supports de came supérieur et/ou inférieur (26) comportent des moyens de codage correspondant aux deuxièmes moyens de codage de l'élément de codage (36).

13. Procédé pour le montage d'un support de came (26) d'un rotor (10) d'une presse rotative avec au moins un élément de came de commande (28),
**caractérisé par** les étapes suivantes :
- au moins un élément de codage (36) est fixé au rotor (10) ou à une pièce reliée à celui-ci,
- au moins un élément de came de commande (28) est fixé au support de came (26), la position de l'élément de came de commande (28) sur le support de came (26) étant indiquée clairement par des moyens de codage mécaniques de l'au moins un élément de codage (36).

14. Procédé selon la revendication 13, **caractérisé en ce qu'**une pluralité d'éléments de came de commande (28) est fixée au support de came (26), la position de tous les éléments de came de commande (28) sur le support de came (26) étant indiquée clairement par les moyens de codage de l'élément de codage (36).

15. Procédé selon la revendication 14, **caractérisé en ce que** les moyens de codage de l'élément de codage (36) sont réglables entre au moins deux réglages de codage différents, pour une modification du montage du support de came (26) avec des éléments de came de commande (28), dans lequel les moyens de codage indiquent respectivement clairement des positions différentes des éléments de came de commande (28) sur le support de came (26) dans les au moins deux réglages de codage différents.

16. Procédé selon la revendication 14, **caractérisé en ce que** des éléments de codage (36) différents sont fixés au rotor (10) ou à une pièce reliée à celui-ci pour modifier le montage du support de came (26) avec des éléments de came de commande (28), dans lequel les différents éléments de codage (36) comportent des moyens de codage différents, et dans lequel les différents moyens de codage indiquent respectivement clairement des positions différentes des éléments de came de commande (28) sur le support de came (26).

17. Procédé selon l'une des revendications 13 à 16, **caractérisé en ce que** l'élément de codage (36) est identifié clairement à l'aide de données d'identification.

18. Procédé selon la revendication 17, **caractérisé en ce que** les données d'identification sont transmises à un système de commande de la presse rotative pour l'identification de l'élément de codage (36).

19. Procédé selon l'une des revendications 13 à 18, **caractérisé en ce qu'**un rotor (10) selon l'une des revendications 1 à 12 est utilisé.
